# EUROPEAN PATENT APPLICATION

(11) **EP 4 580 005 A1**
(43) Date of publication of application: **02.07.2025**
(21) Application number: 23871698.9
(22) Date of filing: 30.08.2023
(51) Int. Cl.: H02K 1/276, H02K 21/16

(54) **ROTATING ELECTRIC MACHINE, COMPRESSOR, AND REFRIGERATION DEVICE**

(30) Priority: 26.09.2022 JP 2022152625
(71) Applicant: DAIKIN INDUSTRIES, LTD., Osaka-shi, Osaka 530-0001 (JP)
(72) Inventor: HIRANO, Masaki, Osaka-shi, Osaka 530-0001 (JP)
(74) Representative: Goddar, Heinz J.
(86) International application number: PCT/JP2023/031599
(87) International publication number: WO 2024/070458

(57) **Abstract**

A rotor core (32) of a rotating electric machine (20) includes: a first core section (32a); and a second core section (32b) adjacent to an end of the first core section (32a) in a first direction that is an axial direction of a rotation axis. The second core section (32b) is, in the first direction, at least partially ahead of an end of the stator core (22) in the first direction, and has a magnetic resistance structure (R) with a lower magnetic permeability than the first core section (32a). The magnetic resistance structure (R) is formed in the magnetic pole section (S) of the rotor (31) and radially outside permanent magnets (33).

## Description

### TECHNICAL FIELD

The present disclosure relates to a rotating electric machine, a compressor, and a refrigeration apparatus.

### BACKGROUND ART

Patent Document 1 describes a motor with a rotor having an end surface protruding more upward than an end surface of a stator. In this motor, the height of the center of the rotor in the axial directions shifts upward from the height of the center of the stator in the axial directions. The effect of the magnetic pull force biases the rotor downward. This reduces the vertical vibration of the drive shaft below the motor.

### CITATION LIST

### PATENT DOCUMENT

Patent Document 1: Japanese Unexamined Patent Publication No. H10-89252

### SUMMARY OF THE INVENTION

### TECHNICAL PROBLEMS

Magnetic flux lines are formed between the rotor and the stator. With an increase in the density of these magnetic flux lines (i.e., the magnetic flux density), the magnetic force increases and the performance (particularly, torque performance) of the motor improves. No study has been however conducted to improve the performance of a motor with a rotor having an end surface protruding more upward than an end surface of a stator.

In is an object of the present disclosure to improve the performance of a rotating electric machine with a rotor having an end surface protruding more than an end surface of a stator in axial directions.

### SOLUTION TO THE PROBLEMS

A first aspect is directed to a rotating electric machine including:
a rotor (31) including a rotor core (32) configured to rotate about a rotation axis (O) and a plurality of permanent magnets (33) in magnet holes provided in the rotor core (32); and a stator (21) including a stator core (22) radially outside the rotor (31). When a first direction represents one of axial directions of the rotation axis (O) and a second direction represents the other, the rotor core (32) includes: a first core section (32a) at least partially opposed to the stator core (22) in radial directions, and having substantially the same cross sectional shape perpendicular to the axial directions of the rotation axis (O); and a second core section (32b) adjacent to an end of the first core section (32a) in the first direction and having substantially the same cross sectional shape perpendicular to the axial directions of the rotation axis (O). The second core section (32b) is at least partially ahead of an end of the stator core (22) in the first direction, and has a magnetic resistance structure (R) with a lower magnetic permeability than the first core section (32a). The magnetic resistance structure (R) is formed in a magnetic pole section (S) of the rotor (31) and radially outside the plurality of permanent magnets (33).

In the first aspect, the magnetic flux lines extending from the permanent magnets (33) facing each other in the circumferential directions of the rotor (31) are guided through the first core section (32a) to the stator core (22) by the magnetic resistance structure (R). Accordingly, the magnetic flux of the part of the second core section (32b) not opposed to the stator (21) radially is concentrated on the first core section (32a). This reduces in-plane eddy currents generated in the stator core (22) by the magnetic flux in the axial directions from the second core section (32b) to the stator core (22) and can thus reduce a decrease in the magnetic force. This can result in less deterioration in the performance of the rotating electric machine.

A second aspect is an embodiment of the first aspect. In the second aspect, a center of the rotor core (32) in the axial directions shifts, in the first direction, from a center of the stator core (22) in the axial directions.

In the second aspect, the center of the rotor core (32) in the axial directions shifts from the center of the stator core (22) in the axial directions toward the second core section (32b). This can apply a force (i.e., a pull force) biasing the rotor (31) in the second direction.

A third aspect is an embodiment of the second aspect. In the third aspect,
an end of the first core section (32a) in the first direction shifts, in the first direction, from the end of the stator core (22) in the first direction, and
an end of the first core section (32a) in the second direction shifts, in the first direction, from an end of the stator core (22) in the second direction.

The third aspect can cause a pull force biasing, in the second direction, both ends of the rotor (31) along the rotation axis (O).

A fourth aspect is an embodiment of any one of the first to third aspects. In the fourth aspect, the rotating electric machine further includes: a third core section (32c) having the magnetic resistance structure (R), being adjacent to an end of the first core section (32a) in the second direction, and having a substantially the same cross sectional shape perpendicular to the axial directions of the rotation axis (O).

In the fourth aspect, the second core section (32b) and the third core section (32c) having the magnetic resistance structure (R) are disposed at both ends of the first core section (32a) in the axial directions. This can reduce a deterioration in the performance of the rotating electric machine and increase the pull force biasing the rotor (31) in the second direction as compared to the case of providing only the second core section (32b).

A fifth aspect is an embodiment of the fourth aspect. In the fifth aspect, an end of the first core section (32a) in the first direction shifts, in the first direction, from the end of the stator core (22) in the first direction, an end of the first core section (32a) in the second direction shifts, in the first direction, from an end of the stator core (22) in the second direction, and a part of the third core section (32c) is, in the second direction, ahead of the end of the stator core (22) in the second direction.

The fifth aspect provides the magnetic resistance structure (R) at each of both ends of the rotor core (32). This can thus increase the stack thickness, which is the length of the rotor core (32) in the axial directions and provide a strong magnetic force. In addition, the pull force generated at each of both ends of the rotor (31) in the axial directions acts in the second direction. This can provide a sufficient pull force.

A sixth aspect of the present disclosure is an embodiment of any one of the first to fifth aspects. In the sixth aspect, the magnetic resistance structure (R) is a void (R) in the rotor core (32).

In the sixth aspect, the magnetic resistance structure (R) can be easily provided by simply forming the void (R) in the rotor core (32).

A seventh aspect is an embodiment of the sixth aspect. In the seventh aspect, when the rotor (31) is viewed along the rotation axis (O), the rotor core (32) has an outer circumferential end with a constant cross-sectional shape perpendicular to the rotation axis (O).

In the seventh aspect, the outer circumferential surface of the rotor core (32) can be formed smoothly. This can reduce the flow resistance of the fluid flowing in the axial directions between the stator core (22) and the rotor core (32).

An eighth aspect is an embodiment of any one of the first to seventh aspects. In the eighth aspect, the magnetic resistance structure (R) is formed by cutting out, in the axial directions, an outer circumferential end of the rotor core (32).

The eighth aspect can provide the magnetic resistance structure (R) by simply cutting out the outer circumferential end of the rotor core (32). The magnetic permeability of the magnetic resistance structure (R) can be reduced by largely cutting out the rotor core (32).

A ninth aspect is an embodiment of any one of the first to eighth aspects. In the ninth aspect, in the axial directions, the first core section (32a) has the same length as the stator core (22).

The ninth aspect can provide the same advantages as the first aspect.

A tenth aspect is an embodiment of any one of the first to ninth aspects. In the tenth aspect, the permanent magnets (33) are ferrite magnets.

In the tenth aspect, the ferrite magnets have a relatively weak magnetic force, which may be strengthened by increasing the stack thickness of the rotor (31). An increase in the stack thickness of the rotor (31) however increases the size of the rotating electric machine. To address the problem, the magnetic resistance structure (R) can reduce the decrease in the magnetic force of the rotating electric machine while reducing the increase in the stack thickness of the rotor (31).

An eleventh aspect of the present disclosure is an embodiment of any one of the first to tenth aspects. In the eleventh aspect, the plurality of permanent magnets (33) is aligned in circumferential directions of the rotor core (32) and penetrates the rotor core (32) along the rotation axis (O), and the plurality of permanent magnets (33) has the same cross-sectional shape orthogonal to the rotation axis (O).

The eleventh aspect can provide the permanent magnets (33) easily in the rotor without a need to shorten or lengthen some of the permanent magnets (33) in accordance with the shape of the rotor (31).

A twelfth aspect is directed to a compressor including: the rotating electric machine of any one of first to eleventh aspects; and a compression mechanism (50) driven by the rotating electric machine.

The twelfth aspect can provide the compressor including the rotating electric machine of any one of the first to eleventh aspects and the compression mechanism (50).

The thirteenth aspect is directed to a refrigeration apparatus including the compressor according to the twelfth aspect.

The thirteenth aspect can provide the refrigeration apparatus including the compressor of the twelfth aspect.

### BRIEF DESCRIPTION OF THE DRAWINGS

FIG. 1 is a schematic configuration diagram of a refrigeration apparatus according to an embodiment.
FIG. 2 is a longitudinal sectional view of a compressor of the embodiment taken along a section parallel with axial directions.
FIG. 3 shows a motor as viewed in the axial directions.
FIG. 4 is a perspective view of a part of a longitudinal section of the rotor.
FIG. 5 is a schematic view of a longitudinal section of an example typical rotating electric machine.
FIG. 6 corresponds to FIG. 5 and shows a rotating electric machine with a rotor having an increased stack thickness.
FIG. 7 is a perspective cross-sectional view of a part of the motor.
FIG. 8 shows an area of a magnetic pole and an area radially outside a permanent magnet as viewed in the axial directions.
FIG. 9 illustrates magnetic flux generated in a motor. In FIG. 9, (A) shows a part of the rotor as viewed in the axial directions, and (B) shows a part of a longitudinal section of the rotating electric machine.
FIG. 10 is a perspective view of a part of a rotor according to another embodiment.
FIG. 11 is a plan view of a shape of a permanent magnet according to another embodiment.
FIG. 12 is a plan view of a shape of a permanent magnet according to yet another embodiment.

### DESCRIPTION OF EMBODIMENTS

Embodiments of the present invention will be described in detail below with reference to the drawings. The following embodiments are merely exemplary ones in nature, and are not intended to limit the scope, applications, or use of the invention. Features of the embodiments, variations, and other examples described below can be combined or partially substituted within the range where the present invention can be embodied. In the drawings described below, hatching indicating a cross section is partly omitted in some cases.

### (1) Refrigeration Apparatus

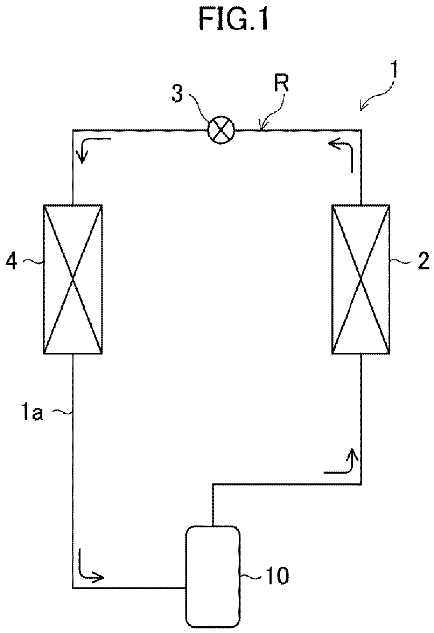

As shown in FIG. 1, a refrigeration apparatus (1) according to this embodiment is an air conditioner. The air conditioner (1) may be dedicated to cooling or heating. The refrigeration apparatus (1) includes a refrigerant circuit (1a) filled with a refrigerant. The refrigerant circuit (1a) includes a compressor (10), a radiator (2), an expansion valve (3), and an evaporator (4). The refrigerant circuit (1a) performs a vapor compression refrigeration cycle. The air conditioner (1) may be an air conditioner configured to switch between cooling and heating. In this case, the air conditioner has a switching mechanism (e.g., a four-way switching valve) configured to switch the directions of circulation of the refrigerant.

In the refrigeration cycle, the refrigerant compressed by the compressor (10) dissipates heat to air in the radiator (2). The refrigerant which has dissipated the heat is decompressed by the expansion valve (3) and evaporates in the evaporator (4). The evaporated refrigerant is sucked into the compressor (10) (see the arrows in FIG. 1).

### (2) Compressor

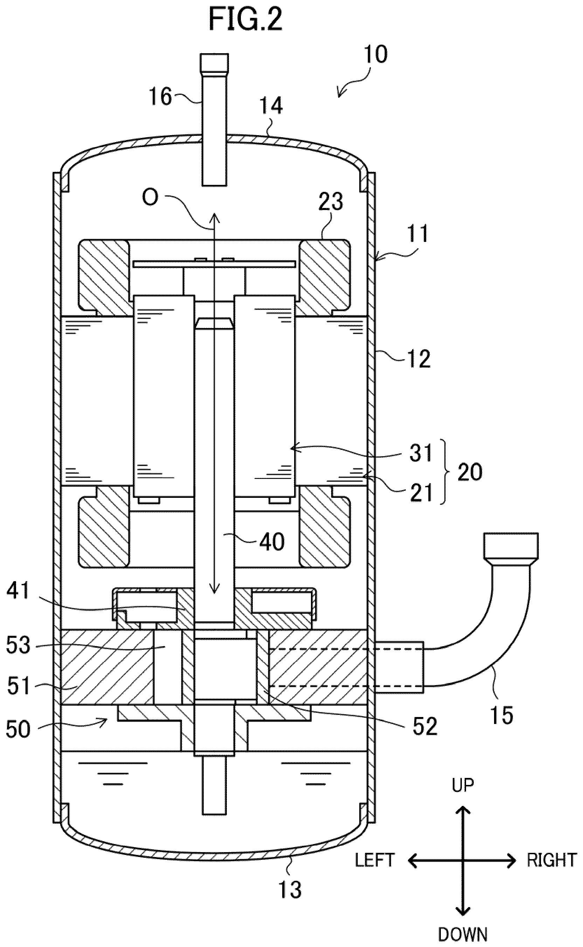

As shown in FIG. 2, the compressor (10) according to this embodiment is a rotary compressor. The compressor (10) includes a casing (11), a motor (20), a drive shaft (40), and a compression mechanism (50). In the following description, the terms "up", "down", "right", and "left" represent directions when the compressor (10) is viewed from the front (see the arrows in FIG. 2). Specifically, the terms "up" and "down" also represent the axial directions of the drive shaft (40). The terms "right" and "left" represent the directions orthogonal to the axial directions, and are also radial directions of the motor (20) (or the casing (11)). In the following description, the upward direction may be referred to as a "first direction" and downward direction as a "second direction".

### (2-1) Casing

The casing (11) is a hermetic container. The inside of the casing (11) is filled with highpressure refrigerant discharged from the compression mechanism (50).

The casing (11) is made of a metal material. The casing (11) includes a barrel (12), a bottom (13), and a top (14). The barrel (12) is a tubular member extending in the vertical direction. The axial directions of the tube of the barrel (12) correspond to the vertical direction. The bottom (13) closes the lower end of the barrel (12), while the top (14) closes the upper end of the barrel (12).

The casing (11) houses the motor (20), the drive shaft (40), and the compression mechanism (50). The motor (20), the drive shaft (40), and the compression mechanism (50) are arranged in the casing (11) in this order from the top.

### (2-2) Motor

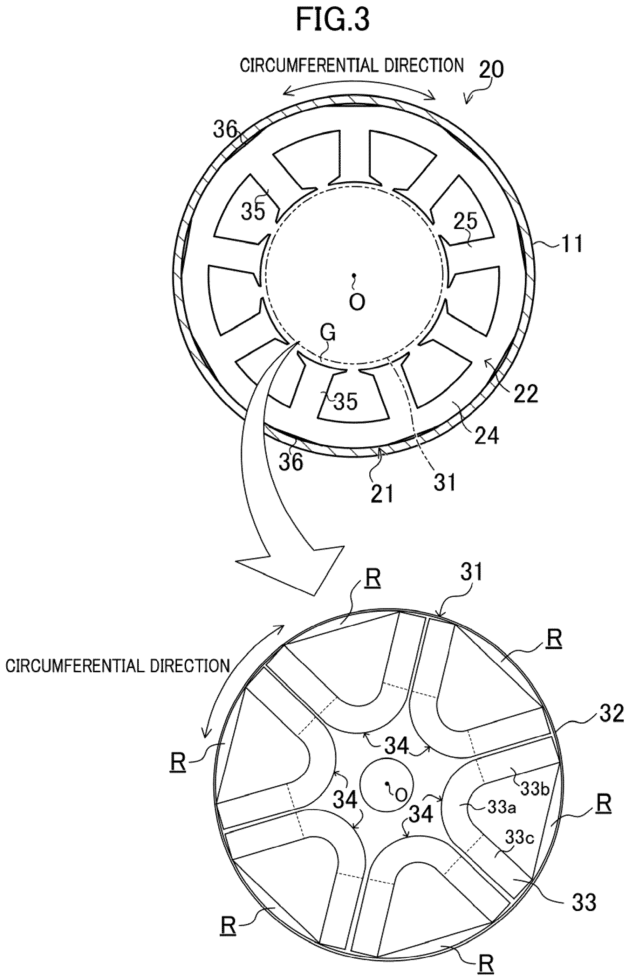

As shown in FIGS. 2 and 3, the motor (20) includes a stator (21) and a rotor (31). The number of rotations of the motor (20) is controlled by the inverter device. In other words, the compressor (10) is an inverter compressor having a variable number of rotations. The motor (20) is an example of the rotating electric machine (20).

The stator (21) is fixed to the inner circumferential surface of the barrel (12). The stator (21) includes a stator core (22). The stator core (22) is disposed radially outside the rotor (31). The stator core (22) is formed by stacking a plurality of electromagnetic steel sheets in the axial directions. The stator core (22) includes an annular back yoke (24) and teeth (25). Six core cuts (26) are provided in the outer circumferential surface of the back yoke (24). The core cuts (26) are grooves extending in the axial directions of the stator core (22). The teeth (25) extend radially inward from the inner circumferential surface of the back yoke (24). In this embodiment, six teeth (25) are aligned at equal pitches (specifically, 60° pitches) in the circumferential directions. The stator (21) includes a coil (23). The coil (23) is wound around the teeth (25) (see FIG. 2).

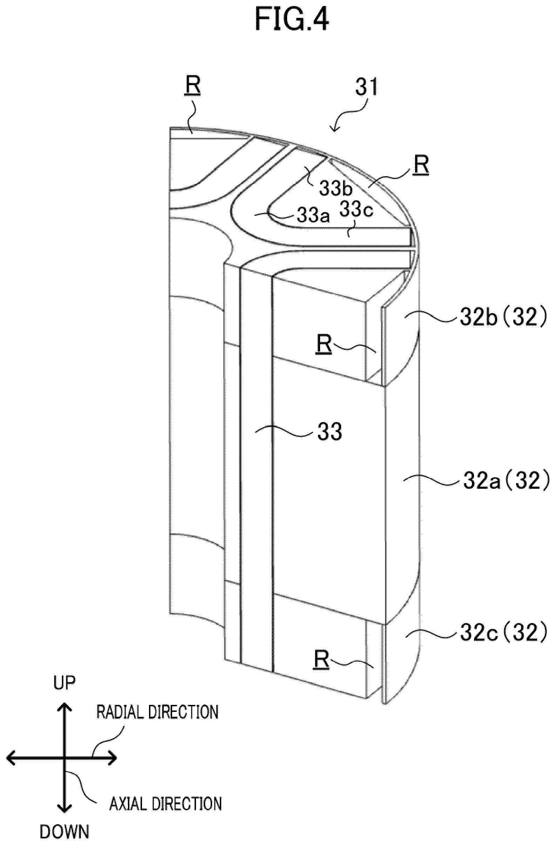

As shown in FIGS. 3 and 4, the rotor (31) includes a rotor core (32), a plurality of permanent magnets (33), and magnetic resistance structures (R). The magnetic resistance structures (R) will be described later. The rotor core (32) rotates about the rotation axis (O). The rotor core (32) is disposed inside the stator (21). In the following description, the directions in which the rotation axis (O) extends may be simply referred to as "axial directions". The circumferential directions extend about the rotation axis (O) as viewed in the axial directions.

The permanent magnets (33) are arranged inside the rotor core (32). The permanent magnets (33) according to this embodiment are ferrite magnets. The permanent magnets (33) are arranged inside slots (34) in the rotor core (32). The slots (34) penetrate the rotor core (32) in the axial directions. The slots (34) extend radially outward from the center of the rotation axis (O) as viewed in the axial directions. Specifically, six slots (34) each in a V-shape as viewed from above are arranged at equal intervals in the circumferential directions of the rotor (31).

Each of the permanent magnets (33) is provided in one of the six slots (34). That is, the rotor (31) according to this embodiment includes six permanent magnets (33). The six permanent magnets (33) are arranged in the circumferential directions of the rotor core (32) and penetrate the rotor core (32) in the axial directions. Each of the permanent magnets (33) has the same cross-sectional shape orthogonal to the axial directions (see FIG. 4).

As viewed in the axial directions, the permanent magnets (33) are each configured in the V-shape to be fitted in the associated slot (34). Specifically, each of the permanent magnets (33) includes a first magnetic part (33a) in a V-shape as viewed in the axial directions, and a second magnetic part (33b) and a third magnetic part (33c) each extending radially outward from an end of the first magnetic part (33a). As viewed in the axial directions, the second magnetic part (33b) and the third magnetic part (33c) extend linearly to the vicinity of the outer circumferential end of the rotor (31). The second magnetic part (33b) and the third magnetic part (33c) are adjacent to each other in the circumferential directions of the rotor (31).

### (2-3) Drive Shaft

As shown in FIG. 2, the drive shaft (40) is fixed to the center of the rotation axis (O) of the rotor (31). The drive shaft (40) extends downward from the motor (20). The drive shaft (40) is rotationally driven by the motor (20). The drive shaft (40) is rotatably supported by a bearing (41) provided below the drive shaft (40).

### (2-4) Compression Mechanism

The compression mechanism (50) has a cylinder (51) and a piston (52) provided inside the cylinder (51). A cylinder chamber (53) is formed between the inner peripheral surface of the cylinder (51) and the outer peripheral surface of the piston (52). In the cylinder chamber (53), the fluid is compressed by the piston (52) driven by the drive shaft (40).

### (2-5) Suction Pipe and Discharge Pipe

The compressor (10) has a suction pipe (15) and a discharge pipe (16). The suction pipe (15) penetrates the barrel (12) in the radial directions, and communicates with the cylinder chamber (53). A low-pressure refrigerant in the refrigerant circuit (1a) is sucked through the suction pipe (15) into the cylinder chamber (53). The discharge pipe (16) penetrates the top (14) in the axial directions, and communicates with the internal space of the casing (11). The refrigerant compressed in the compression mechanism (50) flows through portions, such as the core cuts (26) of the motor (20), and is then sent through the discharge pipe (16) to the refrigerant circuit (1a).

### (3) Problems of Motor with Permanent Magnets with Low Magnetic Force

In view of the manufacturing costs of the motor, relatively inexpensive ferrite magnets are preferably applied to the motor. However, since the ferrite magnets have a relatively low magnetic force, there is a need to increase the surface areas of the ferrite magnets provided in the rotor core so that the motor exhibits predetermined performance. For example, the surface areas of the ferrite magnets can be increased by increasing the thickness of the rotor in the axial directions.

In the rotary compressor according to this embodiment, there is a demand to reduce the anomalous sound from the compression mechanism, which is generated when the drive shaft is vibrated vertically by driving the motor. To meet this demand, if the drive shaft is biased downward, a relatively strong thrust force then acts on the lower bearing, which reduces the vertical vibration of the drive shaft. As a method of biasing the drive shaft downward in this manner, the use of a pull force acting between the rotor and the stator is conceivable. That is, if the rotor core is disposed to protrude more upward than the stator core in the axial directions, pull force of pulling the rotor downward acts.

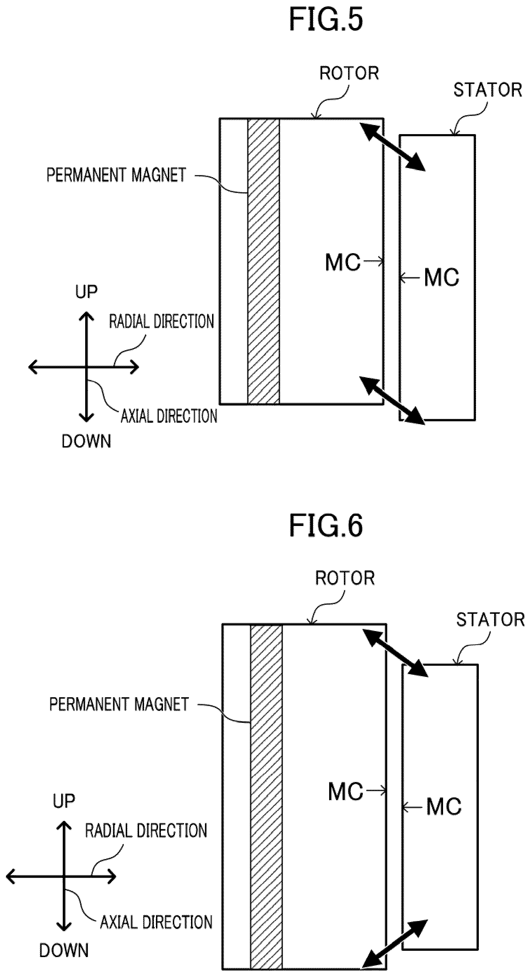

Specifically, as shown in FIG. 5, if the rotor core and the stator core have the same length in the axial directions, the height of the center (hereinafter referred to as a "magnetic center (MC)") of the rotor core in the axial directions shifts upward from the magnetic center of the stator core. Pull forces then act between the upper end of the stator core and the upper end of the rotor core, and between the lower end of the stator core and the lower end of the rotor core. Since these pull forces act to bias the rotor core downward (see the arrows in FIG. 5), the drive shaft connected to the motor is pressed onto the bearing disposed below. As a result, the vertical vibration of the drive shaft decreases.

However, as shown in FIG. 6, if the length of the rotor core in the axial directions is increased to increase the surface areas of the permanent magnets and the lower end of the rotor core protrudes more downward than the lower end of the stator core, a pull force biasing the rotor core upward acts between the lower end of the stator core and the lower end of the rotor core. Even if the magnetic centers of the rotor core and the stator core shift from each other, the pull force (i.e., the force biasing the rotor downward) acting between the upper end of the stator core and the upper end of the rotor core is reduced by the pull force (i.e., the force biasing the rotor upward) acting between the lower end of the stator core and the lower end of the rotor core (see the arrows in FIG. 6). This reduces thus the advantage of reducing the vertical vibration of the drive shaft.

In contrast to this, by largely deviating the magnetic center of the rotor core upward from the magnetic center of the stator core, a sufficient pull force biasing the rotor downward can be provided. However, with an increase in the area of the part of the stator core not opposed to the rotor core, the magnetic flux density between the stator core and the rotor core decreases, which may deteriorate the performance (particularly, the torque performance) of the motor. If the magnetic centers of the stator core and the rotor core are largely apart from each other, the length of the entire motor in the axial directions increases and eventually the size of the motor increases.

To address such a problem, the rotor core (32) of the motor (20) according to this embodiment has the magnetic resistance structures (R). These magnetic resistance structures (R) reduce the deterioration in the performance of the motor (20) and can sufficiently generate a downward pull force on the rotor (31). The rotor core (32) and the magnetic resistance structures (R) according to this embodiment will be described in detail below.

### (4) First Core Section, Second Core Section, and Third Core Section

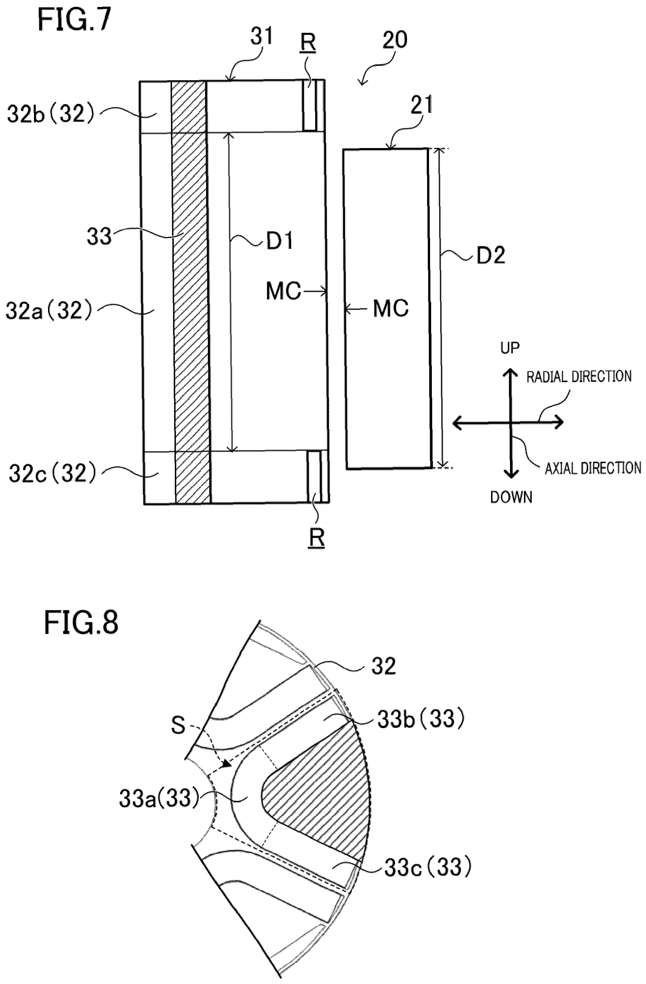

As shown in FIGS. 4 and 7, the rotor core (32) according to this embodiment includes: a first core section (32a), a second core section (32b), and a third core section (32c), each in a substantially cylindrical shape. The second core section (32b), the first core section (32a), and the third core section (32c) are arranged in this order from the top.

The first core section (32a) is at least partially opposed to the stator core (22) in radial directions, and has a substantially constant cross sectional shape perpendicular to the axial directions of the rotation axis (O). The length D1 of the first core section (32a) in the axial directions (i.e., the vertical direction) is equal to the length D2 of the stator core (22) in the axial directions (i.e., the vertical direction). The upper end of the first core section (32a) shifts upward from the upper end of the stator core (22). The lower end of the first core section (32a) shifts upward from the lower end of the stator core (22).

The second core section (32b) is adjacent to the upper end of the first core section (32a). The second core section (32b) is disposed above the upper end of the stator core (22). That is, the second core section (32b) protrudes more upward than the upper end of the stator core (22).

The third core section (32c) is adjacent to the lower end of the first core section (32a). A part of the third core section (32c) is disposed below the lower end of the stator core (22). That is, a part of the third core section (32c) protrudes more downward than the lower end of the stator core (22).

In this manner, the rotor core (32) is longer than the stator core (22) in the axial directions. The center (i.e., the magnetic center) of the rotor core (32) in the axial directions shifts upward from the center (i.e., the magnetic center) of the stator core (22) in the axial directions.

The first core section (32a), the second core section (32b), and the third core section (32c) have the completely or substantially constant cross-sectional shape perpendicular to the axial directions of the rotation axis (O). The range of "substantially the same" includes variations in the rotor core (32) at the time of manufacturing, the case where the rotor (31) has skews (oblique grooves), or slight differences that have relatively small influences on the motor characteristics.

The first core section (32a) and the second core section (32b) have the completely or substantially constant cross-sectional shape perpendicular to the axial directions, except for the magnetic resistance structure (R). The first core section (32a) and the second core section (32c) have the completely or substantially constant cross-sectional shape perpendicular to the axial directions, except for the magnetic resistance structure (R).

On the outer circumferential surface of the rotor core (32), the first core section (32a) and the second core section (32b) are smoothly connected to each other, and the first core section (32a) and the third core section (32c) are smoothly connected to each other. In other words, the outer circumferential surfaces of the first core section (32a) and the second core section (32b) are connected to be substantially flush with each other. The outer circumferential surfaces of the first core section (32a) and the third core section (32c) are also connected to be substantially flush with each other. In this manner, when the rotor (31) is viewed along the rotation axis (O), the rotor core (32) has a constant cross-sectional shape in the axial directions.

### (5) Magnetic Resistance Structure

Each of the second core section (32b) and the third core section (32c) is provided with a magnetic resistance structure (R). The magnetic resistance structure (R) has a lower magnetic permeability than the first core section (32a). The second core section (32b) and the third core section (32c) are in the same shape. Since the magnetic resistance structures (R) in the second core section (32b) and the third core section (32c) are the same, only the magnetic resistance structure (R) of the second core section (32b) will be described below and the description of the magnetic resistance structure (R) of the third core section (32c) will be omitted.

As shown in FIG. 8, the magnetic resistance structure (R) is formed in the associated magnetic pole section (S) of the rotor (31) and radially outside the associated permanent magnet (33).

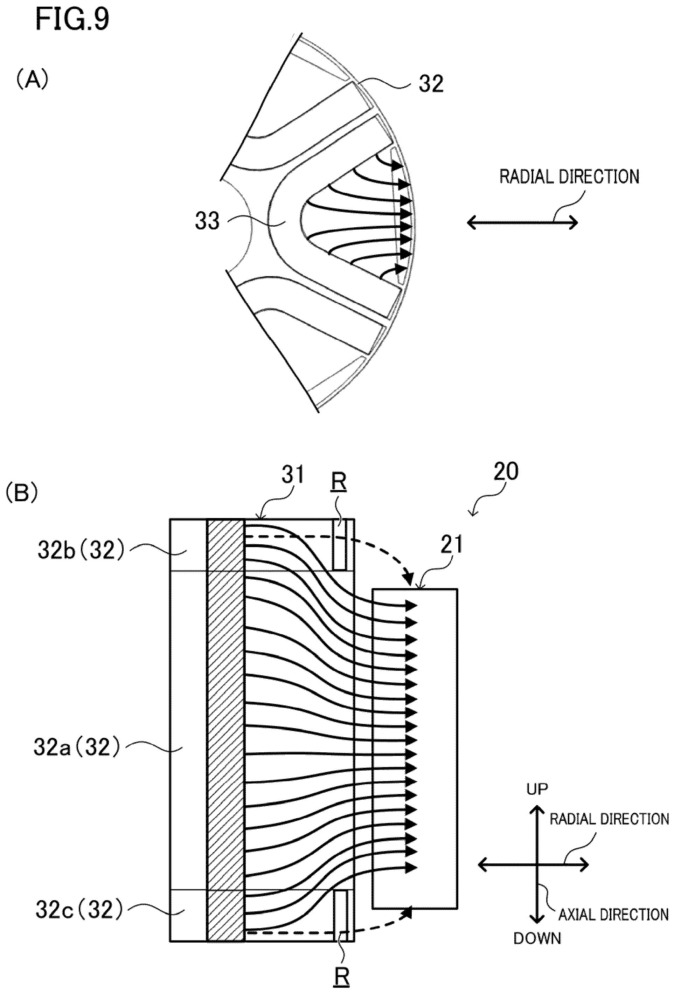

Specifically, the magnetic pole section (S) in each permanent magnet (33) of the rotor (31) according to this embodiment includes areas facing in the circumferential directions of the permanent magnet (33) as viewed in the axial directions and an area around the areas (including the permanent magnet (33)) (i.e., the area surrounded by the broken line in FIG. 8). The magnetic resistance structure (R) according to this embodiment is provided in at least a part of the area (the hatched area in FIG. 9) radially outside the first magnetic part (33a), the second magnetic part (33b), and the third magnetic part (33c).

As shown in FIGS. 3, 4, and 7, the magnetic resistance structure (R) according to this embodiment is a void (R) formed in the rotor core (32). The void (R) is provided in an area radially outside a line connecting the radially outer ends of the second magnetic part (33b) and the third magnetic part (33c) of each permanent magnet (33). The void (R) extends along the outer circumferential surfaces of the second core section (32b) and the third core section (32c). In the rotating electric machine (20) according to this embodiment, six such voids (R) are formed as viewed in the axial directions.

The voids (R) according to this embodiment are through holes that penetrate the second core section (32b) and the third core section (32c) from the upper and lower ends. That is, the lower end of each void (R) of the second core section (32b) is flush with the upper end of the first core section (32a). The upper end of the void (R) of the third core section (32c) is flush with the lower end of the first core section (32a).

### (6) Features

### (6-1) First Feature

The second core section (32b) of the rotor core (32) is at least partially located above the upper end of the stator core (22) and has a magnetic resistance structure (R) with a lower magnetic permeability than the first core section (32a). The magnetic resistance structure (R) is formed in a magnetic pole section (S) of the rotor (31) and radially outside the permanent magnet (33).

Here, as shown in (A) of FIG. 9, when the rotor (31) is viewed from above, the circumferentially facing surfaces of the second magnetic part (33b) and the third magnetic part (33c) of the permanent magnets (33) have the same polarity. The magnetic flux extending in the circumferentially facing direction is thus directed radially outward.

As shown in (B) of FIG. 9, with no magnetic resistance structure (R) provided in the second core section (32b), the magnetic flux extend in directions indicated by broken line arrows. However, since the magnetic resistance structure (R) is provided in an area of the second core section (32b) which hinders the flow of the magnetic flux directed radially outward from the permanent magnet (33), the magnetic flux from the permanent magnet (33) extends to the first core section (32a) so as to bypass the magnetic resistance structure (R).

In this manner, the magnetic flux of the second core section (32b) is guided to the stator core (22) via the first core section (32a). Accordingly, the magnetic flux of the part of the second core section (32b) not opposed to the stator core (22) is concentrated on the first core section (32a). This can result in less decrease in the magnetic force between the rotor (31) and the stator (21) and less deterioration in the performance of the rotating electric machine (20).

### (6-2) Second Feature

The center of the rotor core (32) in the axial directions shifts upward from the center of the stator core (22) in the axial directions. In other words, the magnetic center of the rotor core (32) shifts upward, that is, in the first direction, from the magnetic center of the stator core (22).

With this configuration, the magnetic center of the rotor core (32) shifts from the magnetic center of the stator core (22) toward the second core section (32b). This can apply a downward pull force on the rotor (31). Accordingly, the thrust force acting on the lower bearing to cause less vertical vibration of the drive shaft (40), which can result in less anomalous sound.

### (6-3) Third Feature

The upper end of the first core section (32a) shifts upward from the upper end of the stator core (22). The lower end of the first core section (32a) shifts upward from the lower end of the stator core (22).

This causes a pull force biasing both the ends of the rotor (31) in the axial directions downward, and can thus reliably apply a thrust force to the lower bearing.

### (6-4) Fourth Feature

The motor (20) further includes: the third core section (32c) having the magnetic resistance structure (R), being adj acent to the lower end of the first core section (32a) and having a substantially constant cross sectional shape perpendicular to the axial directions of the rotation axis (O).

This provides the magnetic resistance structure (R) at each end of the rotor (31) in the axial directions and can thus increase the downward stack thickness of the rotor (31) in addition to the upward stack thickness. Accordingly, the surface areas of the permanent magnets (33) increase, which can provide a strong magnetic force and reduce an increase in the size of the motor.

### (6-5) Fifth Feature

The upper end of the first core section (32a) shifts upward from the upper end of the stator core (22). The lower end of the first core section (32a) shifts upward from the lower end of the stator core (22). A part of the third core section (32c) is disposed below the lower end of the stator core (22).

With this configuration, a downward pull force acts on the upper and lower parts of the rotor (31), which can improve the force for reducing the vertical vibration of the drive shaft. In this manner, in addition to the advantages of the fourth feature, the anomalous sound can be reliably reduced.

### (6-6) Sixth Feature

The magnetic resistance structure (R) is a void (R) in the rotor core (32). The magnetic resistance structure (R) can be easily provided by simply opening the void (R) in the rotor core (32). In this embodiment, the void (R) is provided in an area radially outside a line connecting the radially outer ends of the second magnetic part (33b) and the third magnetic part (33c). The void (R) extends along the outer circumferential surfaces of the second core section (32b) and the third core section (32c).

### (6-7) Seventh Feature

When the rotor (31) is viewed along the rotation axis (O), the rotor core (32) has an outer circumferential end with a constant cross-sectional shape perpendicular to the axial directions. The outer circumferential surface of the rotor core (32) can be formed smoothly. This can reduce the flow resistance of the refrigerant flowing through the space (i.e., the air gap) between the stator core (22) and the rotor core (32).

### (6-8) Eighth Feature

The permanent magnets (33) are ferrite magnets. The ferrite magnets have a relatively weak magnetic force, which may be strengthened by increasing the stack thickness of the rotor (31). The stack thickness of the rotor (31) then causes an increase in the size of the motor (20). However, with the magnetic resistance structure (R) provided, the magnetic force can be strengthened without relatively increasing the stack thickness of the rotor (31), which can reduce an increase in the size of the motor (20).

### (6-9) Ninth Feature

The permanent magnets (33) are arranged in the circumferential directions of the rotor core (32) and penetrate the rotor core (32) in the axial directions. Each of the permanent magnets (33) has a constant cross-sectional shape orthogonal to the axial directions. This can provide the permanent magnets (33) easily in the rotor without a need to shorten or lengthen some of the permanent magnets (33) in accordance with the shape of the rotor core (32).

### (7) Other Embodiments

The above-described embodiments may be modified as follows.

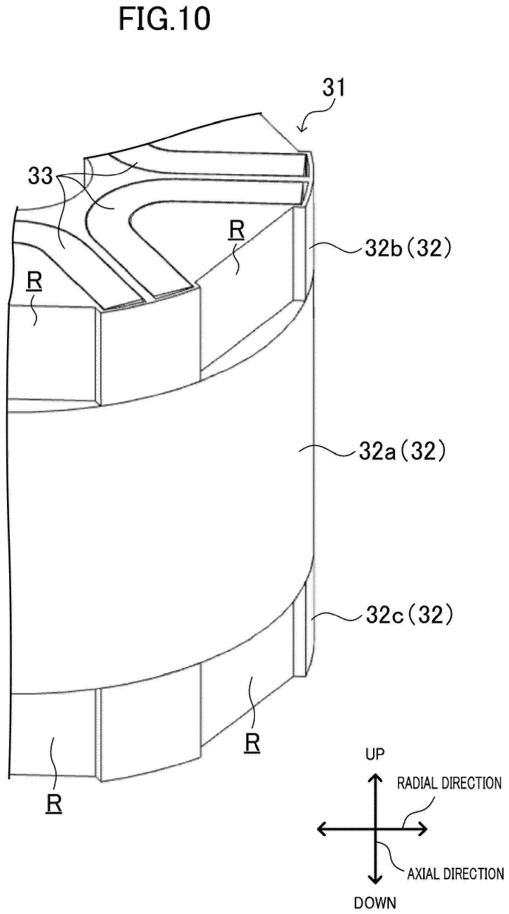

As shown in FIG. 10, the magnetic resistance structure (R) is formed by cutting out, in the axial directions, the outer circumferential end of the rotor core (32). The magnetic resistance structure (R) can be provided easily by simply cutting out the outer circumferential end of the rotor core (32). In addition, since the space volume can be increased as compared to the void (R) of the above embodiments, the magnetic permeability can be reduced accordingly. This increases the concentration of the magnetic flux from the second core section (32b) and the third core section (32c) onto the first core section (32a) and can thus reduce a deterioration in the performance of the motor (20).

The second core section (32b) and the third core section (32c) are not necessarily in the same shape. Specifically, the second core section (32b) may be longer or shorter than the third core section (32c) in the axial directions. The magnetic resistance structures (R) in the second core section (32b) and the third core section (32c) are not necessarily the same or in the same shape.

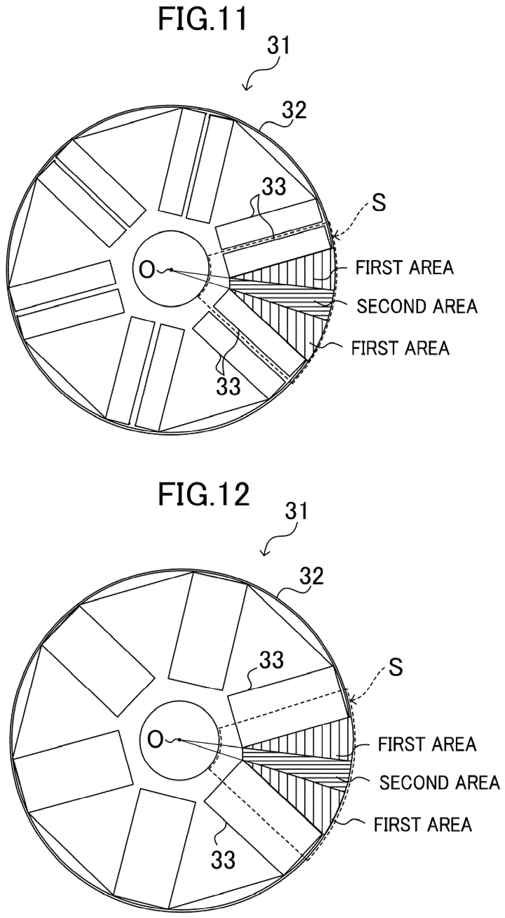

As shown in FIG. 11, each permanent magnet (33) in the rotor (31) not necessarily has the first magnetic part (33a) as viewed in the axial directions. In this case, the magnetic resistance structure (R) may be provided in magnetic pole sections (S) of the rotor (31) and first areas (i.e., the areas with the vertical lines in FIG. 11), or the magnetic pole sections (S) of the rotor (31) and a second area (i.e., the area with the horizontal lines in FIG. 11). Each first area includes a radially outer side of the associated permanent magnet (33). The second area is other than the first areas out of the facing area in the circumferential directions of the second magnetic part (33b) and the third magnetic part (33c).

As shown in FIG. 12, each of the permanent magnets (33) in the rotor (31) not necessarily includes the first magnet, and the second magnetic part (33b) and the third magnetic part (33c) may be integrated with each other as viewed in the axial directions. In this case, the magnetic pole section (S) is the area surrounded by the broken line in FIG. 12. The magnetic resistance structure (R) may be provided in the magnetic pole section (S) of the rotor (31) and first areas (i.e., the areas with the vertical lines in FIG. 12), or the magnetic pole section (S) of the rotor (31) and in a second area (i.e., the area with the horizontal lines in FIG. 12). Each first area includes a radially outer side of the associated permanent magnet (33). The second area is other than the first areas out of the facing areas in the circumferential directions of the second magnetic part (33b) and the third magnetic part (33c).

Each magnetic resistance structure (R) may be provided in an area of the rotor core (32) that blocks the flow of the magnetic flux directed radially outward from the associated permanent magnet (33). For example, the magnetic resistance structure (R) may be provided in an area between a first magnetic pole (corresponding to the second magnetic part (33b) according to the embodiment described above) of each permanent magnet and a second magnetic pole (corresponding to the third magnetic part (33c) according to the embodiment described above) of the permanent magnet (33), or in an area radially outside the area. The second magnetic pole has the same polarity as the first magnetic pole and is adjacent to the first magnetic pole in the circumferential directions of the rotor core (32).

The magnetic resistance structure (R) may be provided in an area between radially outer ends of permanent magnets (corresponding to the second magnetic part (33b) and the third magnetic part (33c) of the above embodiment) adjacent to each other in the circumferential directions of the rotor core (32) with the magnetic pole center line interposed therebetween, or in an area radially outside the area, when the rotor (31) is viewed in the axial directions.

Each permanent magnet (33) may be divided into a plurality of parts. For example, each permanent magnet (33) according to the embodiment described above may be divided into a first magnetic part (33a), a second magnetic part (33b), and a third magnetic part (33c). In an assembly of such permanent magnets (33), the magnetic resistance structure (R) may be provided in an area between the permanent magnets (33) arranged at both ends in the circumferential directions out of the assembly of the permanent magnets (33) arranged in the magnetic pole section (S) of the rotor (31) or in an area radially outside the area, when the rotor (31) is viewed in the axial directions.

The magnetic resistance structure (R) may be formed orthogonally to the flow of the magnetic flux directed radially outside the first core section (32a).

The magnetic resistance structures (R) of the second core section (32b) and the third core section (32c) may be in different shapes. For example, when the magnetic resistance structures (R) has a void (R) structure, the shapes of the voids (R) in the axial directions may be different between the second core section (32b) and the third core section (32c).

The motor (20) only needs to include the second core section (32b) and not necessarily include the third core section (32c).

With an increase in the distance between the magnetic center of the rotor core (32) and the magnetic center of the stator core (22), the rotor core (32) can obtain a stronger pull force. The rotor core (32) and the stator core (22) may thus be arranged with their magnetic centers being relatively distant from each other.

While the embodiments and variations thereof have been described above, it will be understood that various changes in form and details may be made without departing from the spirit and scope of the claims. The embodiments and the variations thereof may be combined and replaced with each other without deteriorating intended functions of the present disclosure. The expressions of "first," "second," . . . described above are used to distinguish the terms to which these expressions are given, and do not limit the number and order of the terms.

### INDUSTRIAL APPLICABILITY

As described above, the present disclosure is useful for a rotating electric machine, a compressor, and a refrigeration apparatus.

### DESCRIPTION OF REFERENCE CHARACTERS

- 1: Refrigeration Apparatus
- 10: Compressor
- 20: Motor (Rotating Electric Machine)
- 21: Stator
- 22: Stator Core
- 31: Rotor
- 32: Rotor Core
- 32a: First Core Section
- 32b: Second Core Section
- 32c: Third Core Section
- 33: Permanent Magnet
- 50: Compression Mechanism
- O: Rotation Axis
- R: Magnetic Resistance Structure (Void)

## Claims

1. A rotating electric machine comprising:
a rotor (31) including a rotor core (32) configured to rotate about a rotation axis (O) and a plurality of permanent magnets (33) in magnet holes provided in the rotor core (32); and
a stator (21) including a stator core (22) radially outside the rotor (31),
when a first direction represents one of axial directions of the rotation axis (O) and a second direction represents the other,
the rotor core (32) including:
a first core section (32a) at least partially opposed to the stator core (22) in radial directions, and having substantially the same cross sectional shape perpendicular to the axial directions of the rotation axis (O); and
a second core section (32b) adjacent to an end of the first core section (32a) in the first direction and having substantially the same cross sectional shape perpendicular to the axial directions of the rotation axis (O),
the second core section (32b)
being, in the first direction, at least partially ahead of an end of the stator core (22) in the first direction, and
having a magnetic resistance structure (R) with a lower magnetic permeability than the first core section (32a),
the magnetic resistance structure (R) being formed in a magnetic pole section (S) of the rotor (31) and radially outside the plurality of permanent magnets (33).

2. The rotating electric machine of claim 1, wherein
a center of the rotor core (32) in the axial directions shifts, in the first direction, from a center of the stator core (22) in the axial directions.

3. The rotating electric machine of claim 2, wherein
an end of the first core section (32a) in the first direction shifts, in the first direction, from the end of the stator core (22) in the first direction, and
an end of the first core section (32a) in the second direction shifts, in the first direction, from an end of the stator core (22) in the second direction.

4. The rotating electric machine of any one of claims 1 to 3, further comprising:
a third core section (32c) having the magnetic resistance structure (R), being adjacent to an end of the first core section (32a) in the second direction, and having substantially the same cross sectional shape perpendicular to the axial directions of the rotation axis (O).

5. The rotating electric machine of claim 4, wherein
an end of the first core section (32a) in the first direction shifts, in the first direction, from the end of the stator core (22) in the first direction,
an end of the first core section (32a) in the second direction shifts, in the first direction, from an end of the stator core (22) in the second direction, and
a part of the third core section (32c) is, in the second direction, ahead of the end of the stator core (22) in the second direction.

6. The rotating electric machine of any one of claims 1 to 5, wherein
the magnetic resistance structure (R) is a void (R) in the rotor core (32).

7. The rotating electric machine of claim 6, wherein
when the rotor (31) is viewed along the rotation axis (O), the rotor core (32) has an outer circumferential end with the same cross-sectional shape perpendicular to the axial directions.

8. The rotating electric machine of any one of claims 1 to 7, wherein
the magnetic resistance structure (R) is formed by cutting out, in the axial directions, an outer circumferential end of the rotor core (32).

9. The rotating electric machine of any one of claims 1 to 8, wherein
in the axial directions, the first core section (32a) has the same length as the stator core (22).

10. The rotating electric machine of any one of claims 1 to 9, wherein
the plurality of permanent magnets (33) is a plurality of ferrite magnets.

11. The rotating electric machine of any one of claims 1 to 10, wherein
the plurality of permanent magnets (33) is aligned in circumferential directions of the rotor core (32) and penetrates the rotor core (32) in the axial directions, and
the plurality of permanent magnets (33) has the same cross-sectional shape orthogonal to the axial directions.

12. A compressor comprising: the rotating electric machine of any one of claims 1 to 11; and a compression mechanism (50) driven by the rotating electric machine.

13. A refrigeration apparatus comprising: the compressor of claim 12.
